# EUROPEAN PATENT SPECIFICATION

(11) **EP 2 846 435 B1**
(45) Date of publication and mention of the grant of the patent: **30.05.2018**
(21) Application number: 13773137.8
(22) Date of filing: 12.02.2013
(51) Int. Cl.: H02J 50/10, H02J 50/80, B60L 11/18, H01M 10/44, H02J 5/00, H02J 7/02, H04B 5/00

(54) **COMMUNICATION SYSTEM, CHARGE CONTROL APPARATUS, VEHICLE AND FEEDING APPARATUS**
KOMMUNIKATIONSSYSTEM, LADUNGSKONTROLLVORRICHTUNG, FAHRZEUG UND VERSORGUNGSVORRICHTUNG
SYSTÈME DE COMMUNICATION, APPAREIL DE COMMANDE DE CHARGE, VÉHICULE ET APPAREIL D'ALIMENTATION

(30) Priority: 03.04.2012 JP 2012084954
(43) Date of publication of application: 11.03.2015
(73) Proprietor: Sumitomo Electric Industries, Ltd., Osaka-shi, Osaka 541-0041 (JP); Sumitomo Wiring Systems, Ltd., Yokkaichi-shi, Mie 510-8503 (JP); AutoNetworks Technologies, Ltd., Yokkaichi-shi, Mie 510-8503 (JP)
(72) Inventor: OKADA, Ryou, Osaka-shi Osaka 554-0024 (JP); HAGIHARA, Takeshi, Osaka-shi Osaka 554-0024 (JP); IZUMI, Tatsuya, Osaka-shi Osaka 554-0024 (JP); NII, Kazuhiko, Osaka-shi Osaka 554-0024 (JP); TAKATA, Yousuke, Osaka-shi Osaka 554-0024 (JP)
(74) Representative: Hoffmann Eitle
(86) International application number: PCT/JP2013/053254
(87) International publication number: WO 2013/150821

(56) References cited:
- EP-A2- 2 413 429
- WO-A1-2011/093094
- JP-A- 2013 008 922
- JP-B1- 4 803 849
- US-A1- 2004 051 499
- US-B1- 6 448 863
- US-B1- 7 575 478
- "UNDERSTANDING COMMON MODE NOISE", , 30 April 1999 (1999-04-30), XP055224082, http://www.pulseelectronics.com/library/wh ite_papers Retrieved from the Internet: URL:www.pulseelectronics.com/download/3100 /g019/pdf [retrieved on 2015-10-28]
- ( R: "(R) SAE Electric Vehicle Conductive Charge Coupler, SAE Recommended Practice", SAE J1772, REV.MONTH01, 31 August 2001 (2001-08-31), pages 1-30, XP055148258,
- "SAE J 2497:2010 - Power Line Carrier Communications for Commercial Vehicles", SAE STANDARD, SAE, US, vol. SAE J 2497:2010, 9 December 2010 (2010-12-09), pages 1-21, XP008177604,
- SAE: 'SURFACE VEHICLE RECOMMENDED PRACTICE' SURFACE VEHICLE RECOMMENDED PRACTICE October 1996, XP002649095
- NOISE TAISAKU KNOW-HOW SHU July 2001, pages 26 - 30, XP008174955
- Toshio Tomonari: "EMC Countermeasures for In-Vehicle Communication Networks TDK Corporation Magnetics Business Group Figure 1 Examples of Vehicle Communication Networks (CAN / LIN / MOST / FlexRay)", , 4 November 2011 (2011-11-04), XP055316951, Retrieved from the Internet: URL:https://product.tdk.com/en/products/em c/guidebook/eemc_practice_09.pdf [retrieved on 2016-11-07]
- Würth Elektronik: "Common Mode Chokes 1 Welcome to the Würth Elektronik Common Mode Chokes product training module", , 10 September 2010 (2010-09-10), XP055316955, Retrieved from the Internet: URL:https://www.we-online.com/web/fr/index .php/show/media/07_electronic_components/t oolbox_1/product_training/Product_Training _CMC_100728.pdf [retrieved on 2016-11-07]

## Description

### TECHNICAL FIELD

The present invention relates to a communication system in which a control line for transmitting a control signal used for control of charging of an object to be charged and a reference potential line connected to a reference potential are used as media, and a communication signal different from the control signal is transmitted via the media to perform communication.

### BACKGROUND ART

In recent years, electric vehicles and hybrid vehicles are beginning to prevail, which include devices such as motors and batteries, and travel by driving the motors with power stored in the batteries. The electric vehicles charge their batteries with power supplied from external power supply devices. As for the hybrid vehicles, plug-in hybrid vehicles have been practically used, which allow their batteries to be charged by external power supply devices. The external power supply devices are power supply devices installed in ordinary houses or facilities such as commercial charging stations. When a power supply device supplies power to a vehicle, a plug at an end of a charging cable connected to the power supply device is connected to a power supply port which is provided in the vehicle as a power receiving connector. Then, power is supplied from the power supply device to the vehicle via a power supply line contained in the charging cable, and thereby the battery is charged.

Not only the power supply line but also other lines such as a grounding line, a control line, and the like are contained in the charging cable. The control line is a line used for transmission of a control signal such as a control pilot signal or the like used for control of power supply to the power storage device. By transmitting and receiving the control signal between the power supply device and the vehicle via the control line, various states are detected such as the connection state of the charging cable, whether charging is possible or not, the state of charging, and the like, and charging control is performed according to the detected states.

Further, for practical use of vehicles that need external power supply, such as electric vehicles and hybrid vehicles, a communication function is required, which allows a vehicle and a power supply device to transmit and receive information for power supply control, and communication information for management of the amount of power, accounting, or the like.

Thus, standardization of communication such as inband communication has been progressed, in which a communication signal is superposed on a signal to be transmitted and received between a vehicle and a power supply device (refer to Non-Patent Literature 1, for example).

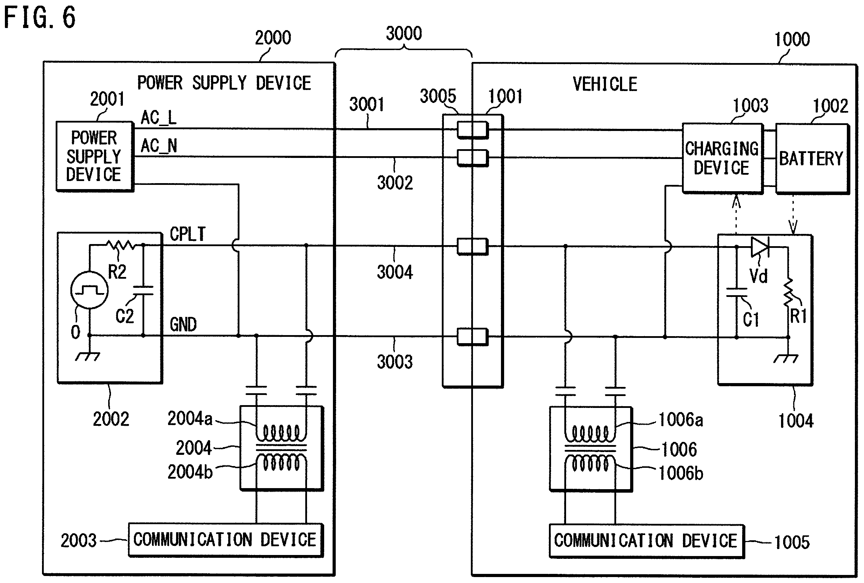

FIG. 6 is an illustrative diagram showing an exemplary configuration of a system standardization of which is in progress. In FIG. 6, reference numeral 1000 denotes a vehicle. When the vehicle 1000 is supplied with power from a power supply device 2000, the vehicle 1000 is connected to the power supply device 2000 via a charging cable 3000. The charging cable 3000 contains a pair of power supply lines 3001 and 3002 used for power supply, a grounding line 3003 which is a conducting wire for grounding, and a control line 3004 for transmitting a control signal such as a control pilot signal (CPLT) used for charging control.

An end of the charging cable 3000 is connected to the power supply device 2000 side, and a plug 3005 is provided on the other end of the charging cable 3000. The plug 3005 is connected to a power receiving connector 1001 provided as a connection part at a power supply port on the vehicle 1000 side, and thereby power supply is enabled.

The power supply device 2000 includes a power supply section 2001 that supplies AC power, a charging control device 2002 that performs communication regarding charging control, a communication device 2003 that transmits and receives a communication signal, and a superposition/separation unit 2004 that performs superposition and separation of the communication signal on and from the grounding line 3003 and the control line 3004.

The charging control device 2002 includes various elements such as a capacitor C2, a resistor R2, and the like and various circuits such as an oscillation circuit O and the like. The capacitor C2 and the oscillation circuit O are connected to a ground potential.

The superposition/separation unit 2004 includes a first coil 2004a having both ends connected to the grounding line 3003 and the control line 3004, and a second coil 2004b having both ends connected to the communication device 1005. The first coil 2004a and the second coil 2004b are electromagnetically coupled to each other.

The superposition/separation unit 2004 superposes various communication signals on the grounding line 3003 and the control line 3004, and separates superposed various communication signals. When the superposition/separation unit 2004 superposes various communication signals output from the communication device 2003, and inputs separated various communication signals to the communication device 2003, the communication device 2003 is allowed to perform communication.

The vehicle 1000 includes the power receiving connector 1001, a battery 1002, a charging device 1003 that charges the battery 1002, a charging control device 1004 that performs communication regarding charging control, a communication device 1005 that transmits and receives communication signals, and a superposition/separation unit 1006 that performs superposition and separation of the communication signals on and from the grounding line 3003 and the control line 3004.

The charging control device 1004 includes various elements such as a capacitor C1, a resistor R1, a diode Vd, and the like. The capacitor C1 and the resistor R2 are connected to the grounding potential.

The superposition/separation unit 1006 includes a first coil 1006a having both ends connected to the grounding line 3003 and the control line 3004, and a second coil 1006b having both ends connected to the communication device 1005. The first coil 1006a and the second coil 1006b are electromagnetically coupled to each other.

The superposition/separation unit 1006 superposes various communication signals on the grounding line 3003 and the control line 3004, and separates superposed various communication signals. When the superposition/separation unit 1006 superposes various communication signals output from the communication device 1005, and inputs separated various communication signals to the communication device 1005, the communication device 1005 is allowed to perform communication.

In EP 2 413 429 A2 there is described a charging device for vehicle and a vehicle. The charging device for a vehicle includes a device-side powerline communication modem, a device-side control pilot signal generating circuit, a device-side CPLT signal detecting circuit and a device-side low-pass filter. The device-side modem is used for powerline communication PLC between the vehicle and the charging device. The device-side control pilot CPLT signal generating circuit is used for generating CPLT signals. The device-side CPLT signal detecting circuit is used for detecting the CPLT signals transmitted from the vehicle through the signal line to determine whether or not the vehicle is ready for charging and whether or not the charging is completed. The device-side low-pass filter LPF is connected to an input of the device-side CPLT signal detecting circuit and has such a frequency characteristics that allows the CPLT signals to pass through the device-side LPF but removes signals having frequencies in a frequency band used for PLC.

### CITATION LIST

NON PATENT LITERATURE 1: "SURFACE VEHICLE RECOMMENDED PRACTICE", J1772 JAN2010, Society of Automotive Engineers, Inc., October, 1996 (revised in January, 2010)
NON PATENT LITERATURE 2: EP 2 413 429 A2

### SUMMARY OF INVENTION

### [TECHNICAL PROBLEM]

In the conventional system exemplified in FIG. 6, however, common mode noise generated in the grounding line 3003 and the control line 3004 may flow into the communication device 1005 or the communication device 2003 and cause abnormality such as false operation.

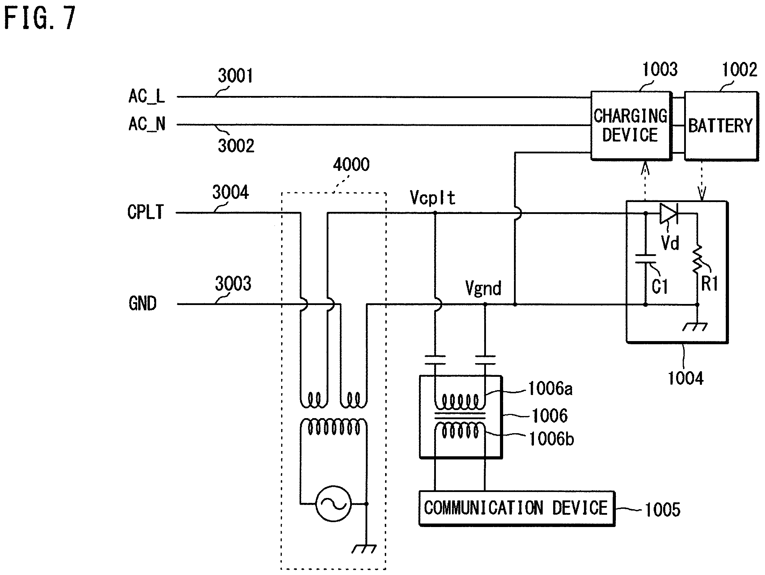

FIG. 7 is a circuit diagram showing an example of a simulation of common mode noise. FIG. 7 shows an equivalent circuit for a BCI test executed as an evaluation test for common mode noise on the vehicle 1000 side of the system shown in FIG. 6. In the evaluation test such as the BCI test, common mode noise is applied from a probe as a noise generation source to the grounding line 3003 and the control line 3004. In FIG. 7, reference numeral 4000 denotes a simulation noise source which is an equivalent circuit of a noise generation source using a probe. The simulation noise source 4000 applies in-phase common mode noises to the grounding line 3003 and the control line 3004.

Voltages Vgnd and Vcplt applied as the common mode noises from the simulation noise source 4000 to the grounding line 3003 and the control line 3004 are originally in-phase signals having the same amplitude, and therefore, cancel out each other in the first coil 1006a of the superposition/separation unit 1006 and do not flow into the communication device 1005.

However, in the charging control device 1004, a difference occurs between the voltage Vgnd on the grounding line 3003 side and the voltage Vcplt on the control line 3004 due to the noise that flows out via the ground (GND), resulting in an imbalance state. The imbalance between the grounding line 3003 side and the control line 3004 side based on the circuit structure in the charging control device 1004 also leads to a difference in line impedance. circuit structure in the charging control device 1004 also leads to a difference in line impedance. As a result, the common mode noises applied to the grounding line 3003 and the control line 3004 change into normal mode noises. The normal mode noises do not cancel out each other in the first coil 1006a of the superposition/separation unit 1006, and flows into the communication device 1005, which may cause abnormality such as false operation. A similar situation may occur in the communication device 2003 on the power supply device 2000 side.

The present invention has been made in view of the above situation. An object of the present invention is to provide a communication system, which suppresses common mode noise by interposing a pair of induction elements in the control line and the grounding line.

Furthermore, another object of the present invention is to provide a communication system, which prevent common mode noise from changing into normal mode noise to eliminate adverse effects on a communication device and the like, by providing a pair of induction elements in front of the charging control device.

### [SOLUTION TO PROBLEM]

A communication system according to the present invention is a communication system including the features of claim 1.

In the present invention, common mode noise is suppressed by providing the pair of induction elements having a high impedance for the common mode noise.

Particularly when the pair of induction elements is provided between the charging control device and branch portions of the two branch lines, common mode noise is prevented from changing into normal mode noise due to influence of a device such as the charging control device.

### [ADVANTAGEOUS EFFECTS OF INVENTION]

In the present invention, the pair of induction elements has a high impedance for common mode noise, and therefore, prevents entry of the common mode noise, resulting in advantageous effects such as that the common mode noise can be suppressed.

Further, in the present invention, since the pair of induction elements has a high impedance for common mode noise, a voltage applied to the grounding line and a voltage applied to the control line are balanced. Therefore, the common mode noise is not changed into normal mode noise, and the voltages of signals applied as the common mode noise to the both ends of the coil cancel out each other. Accordingly, advantageous effects are obtained such as that the noise can be prevented from flowing into the communication device.

### BRIEF DESCRIPTION OF DRAWINGS

[FIG. 1] FIG. 1 is a diagram showing an exemplary configuration of a communication system for understanding the present invention.
[FIG. 2] FIG. 2 is a circuit diagram showing examples of a common mode choke coil and a low-pass filter used in the communication system according to Fig. 1.
[FIG. 3] FIG. 3 is a circuit diagram showing an example of a simulation of common mode noise in the communication system according to Fig. 1.
[FIG. 4] FIG. 4 is a diagram showing an exemplary configuration of a communication system according to Embodiment 1 of the present invention.
[FIG. 5] FIG. 5 is a diagram showing an exemplary configuration of a communication system according to Embodiment 2 of the present invention.
[FIG. 6] FIG. 6 is a diagram showing an exemplary configuration of a system, standardization of which is in progress.
[FIG. 7] FIG. 7 is a circuit diagram showing an example of a simulation of common mode noise.

### DESCRIPTION OF EMBODIMENTS

Hereinafter, the present invention will be described in detail with reference to the drawings showing embodiments thereof.

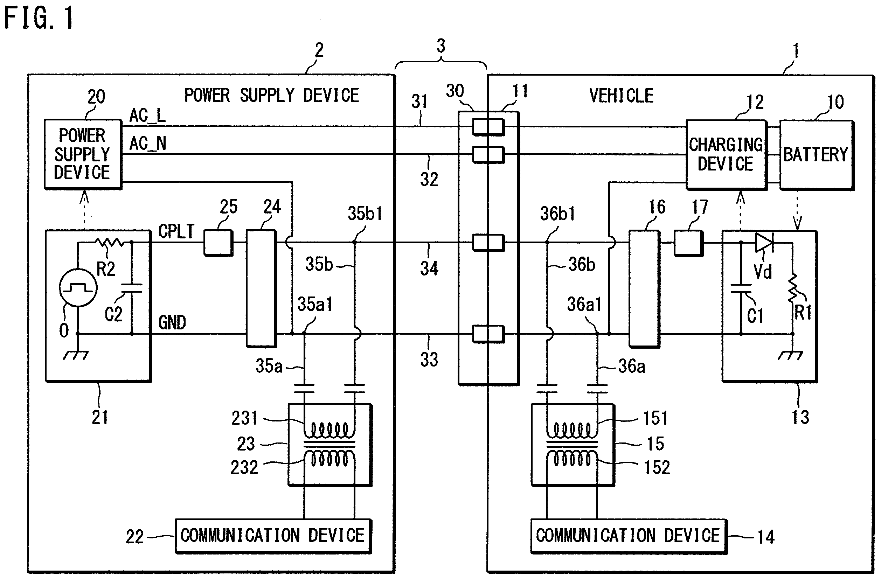

FIG. 1 is a diagram showing an exemplary configuration of a communication system according to an example for understanding the present invention. FIG. 1 shows an example in which the communication system of the present invention is applied to a case in which a battery (power storage device) 10 included in a vehicle 1 such as an electric vehicle, a plug-in hybrid vehicle, or the like is supplied with power from a power supply device 2 such as a charging station.

The vehicle 1 and the power supply device 2 can be connected to each other by a charging cable 3. The charging cable 3 contains a pair of power supply lines 31 and 32 used for power supply, a grounding line (reference potential line) 33 connected to a reference potential such as a ground potential, and a control line 34 for transmitting a control signal such as a control pilot signal (CPLT) used for charging control. An end of the charging cable 3 is connected to the power supply device 2 side, and a plug 30 is provided on the other end of the charging cable 3. The plug 30 can be connected to a power receiving connector 11 provided as an in-vehicle power supply port serving as a connection site on the vehicle 1 side. When the plug 30 at the other end of the charging cable 3 is connected to the power receiving connector 11, connection terminals provided at end portions of the power supply lines 31 and 32, the grounding line 33, and the control line 34 in the charging cable 3 come into contact with connection terminals provided in the power receiving connector 11, whereby the circuit structure exemplarily shown in FIG. 1 is realized.

The power supply lines 31 and 32 are AC lines to which AC voltage is applied. The control line 34 is a signal line through which a control signal such as a control pilot signal is transmitted and received, and charging control is performed based on a control signal transmitted and received when the power supply device 2 and a charging control device 13 are connected to each other. In addition, the grounding line 33 and the control line 34 can be also used as media for transmitting information for performing vehicle authentication, charging management, accounting management, and the like, and other various kinds of information. That is, the vehicle 1 and the power supply device 2 can communicate with each other by superposing and separating a communication signal on and from the grounding line 33 and the control line 34 as media.

The power supply device 2 includes a power supply device 20 that supplies AC power, a charging control device 21 that performs communication regarding charging control, a communication device 22 that transmits and receives a communication signal, a superposition/separation unit 23 that superposes and separates the communication signal on and from the grounding line 33 and the control line 34, a common mode choke coil 24 using a pair of induction elements, and a low-pass filter 25 that blocks the communication signal.

One ends of the power supply lines 31 and 32 and the grounding line 33 are connected to the power supply section 20. One end of the control line 34 and the grounding line 33 are connected to the charging control device 21. Lines inside the power supply device 2 are internal conducting wires that act as extended lines connected to the power supply lines 31 and 32, the grounding line 33, and the control line 34 which are contained in the charging cable 3 provided outside the power supply device 2. However, in the following description, for convenience sake, the lines inside the power supply device 2, including the extended line portions provided as the internal conducting wires, will be described as the power supply lines 31 and 32, the grounding line 33, and the control line 34.

The charging control device 21 is, for example, an output-side circuit complying with the international standard regarding charging control, and performs charging control in various states such as confirmation of connection, start of energization, and the like by transmitting and receiving a control signal such as a control pilot signal.

The charging control device 21 includes various elements such as a capacitor C2, a resistor R2, and the like, and various circuits such as an oscillation circuit O and the like. The parameters of the various elements such as the capacitor C2 and the resistor R2 are appropriately designed in view of the frequency band of the control signal to be transmitted and received, and the like. For example, when a control pilot signal having a rectangular wave of 1 kHz is used as a control signal, a capacitor C2 of 2.2 nF and a resistor R2 of 1.0 kΩ are used.

The communication device 22 is connected to a branch line 35a branched from the grounding line 33 and a branch line 35b branched from the control line 34 via the superposition/separation unit 23, and transmits and receives the communication signal by using the grounding line 33 and the control line 34 as media.

The superposition/separation unit 23 is connected to the branch line 35a branched from the grounding line 33 and the branch line 35b branched from the control line 34 via coupling capacitors. Each coupling capacitor has a high impedance for the control signal, and a low impedance for the communication signal. As an example of the coupling capacitor, a capacitor having a capacitance of 1 nF is used.

The superposition/separation unit 23 is a circuit such as a coupling transformer (an electromagnetic guidance type signal converter) including a first coil 231 having both ends connected to the grounding line 33 and the control line 34 via the respective branch lines 35a and 35b, and a second coil 232 electromagnetically coupled to the first coil 231. The second coil 232 is connected to the communication device 22.

The superposition/separation unit 23 superposes various communication signals on the grounding line 33 and the control line 34, and separates superposed various communication signals. When the superposition/separation unit 23 superposes various communication signals output from the communication device 22, and inputs separated various communication signals to the communication device 22, the communication device 22 is allowed to perform communication.

Each communication signal is transmitted and received as an electromagnetic wave superposed on carriers (subcarriers). As for the frequency bands used for the carriers regarding the communication signal, a frequency band ranging from several 10 kHz to several 100 kHz, e.g., from 30 kHz to 450 kHz, is used for low-speed communication, and a frequency band ranging from several MHz to several 10 MHz, e.g., from 2 MHz to 30 MHz, is used for high-speed communication. Since the control signal is output from an oscillator of 1 kHz, the control signal is a signal of a lower frequency than the communication signal.

The common mode choke coil 24 is interposed in the grounding line 33 and the control line 34, and is located between the charging control device 21, and branch portions 35a1 and 35b1 of the two branch lines 35a and 35b connected to the communication device 22 via the superposition/separation unit 23. The common mode choke coil 24 has a high impedance for common mode noise generated in the grounding line 33 and the control line 34.

The low-pass filter 25 is interposed in the control line 34. The low-pass filter 25 acts as a blocking section that transmits signals in a frequency band lower than a predetermined frequency, e.g., a signal in a frequency band used for the control signal, and blocks highfrequency communication signals.

In FIG. 1, the low-pass filter 25 is located between the charging control device 21 and the common mode choke coil 24. However, the common mode choke coil 24 may be located between the charging control device 21 and the low-pass filter 25.

Further, in FIG. 1, the charging control device 21, the common mode choke coil 24, and the low-pass filter 25 are shown as separated components. However, the charging control device 21 may include the common mode choke coil 24 and the low-pass filter 25. For example, the common mode choke coil 24 and the low-pass filter 25 may be integrated with each other inside or outside the charging control device 21.

The vehicle 1 includes, in addition to the battery 10 and the power receiving connector 11, a charging device 12 that charges the battery, the charging control device 13 that performs communication regarding charging control, a communication device 14 that transmits and receives a communication signal, a superposition/separation unit 15 that superposes and separates the communication signal on and from the grounding line 33 and the control line 34, a common mode choke coil 16 using a pair of induction elements, and a low-pass filter 17 that blocks the communication signal.

When the plug of the charging cable 3 is connected to the power receiving connector 11 of the vehicle 1, connection terminals provided at the other ends of the power supply lines 31 and 32, the other end of the grounding line 33, and the other end of the control line 34, which are contained in the charging cable 3, are connected to the connection terminals provided in the power receiving connector 11.

The power receiving connector 11 includes internal lines connected to the power supply lines 31 and 32, the grounding line 33, and the control line 34 via the connection terminals. The other ends of the internal lines connected to the power supply lines 31 and 32 are connected to the charging device 12 via AC lines provided inside the vehicle 1, whereby the battery 10 is charged by the charging device 12. The other end of the internal line connected to the grounding line 33 is connected to the charging device 12, the charging control device 13, and the battery 10 via an internal line in the vehicle 1 or a body earth. The other end of the internal line connected to the control line 34 is connected to the charging control device 13 via an extended line provided as an internal line in the vehicle 1. In the following description, the respective internal lines, including the AC lines and the extended lines, will be described as the power supply lines 31 and 32, the grounding line 33, and the control line 34.

The charging control device 13 is, for example, an input-side circuit complying with the international standard regarding charging control, and performs charging control in various states such as confirmation of connection, start of energization, and the like, by transmitting and receiving a control signal such as a control pilot signal, when the charging control device 13 becomes communicable with the charging control device 21 of the power supply device 2.

The charging control device 13 includes various elements such as a capacitor C1, a resistor R1, a diode Vd, and the like. The parameters of the various elements such as the capacitor C1 and the resistor R1 are appropriately designed in view of the frequency band regarding the control signal to be transmitted and received, or the like. For example, when a control pilot signal having a rectangular wave of 1 kHz is used as a control signal, a capacitor C2 of 1.8 nF and a resistor R2 of 2.74 kΩ are used.

The communication device 14 is connected to a branch line 36a branched from the grounding line 33 and a branch line 36b branched from the control line 34 via the superposition/separation unit 15, and transmits and receives the communication signal by using the grounding line 33 and the control line 34 as media.

The superposition/separation unit 15 is connected to the branch line 36a branched from the grounding line 33 and the branch line 36b branched from the control line 34 via coupling capacitors. Each coupling capacitor has a high impedance for the control signal, and a low impedance for the communication signal. As an example of the coupling capacitor, a capacitor having a capacitance of 1 nF is used.

The superposition/separation unit 15 is a circuit such as a coupling transformer including a first coil 151 having both ends connected to the grounding line 33 and the control line 34 via the respective branch lines 36a and 36b, and a second coil 152 electromagnetically coupled to the first coil 151. The second coil 152 is connected to the communication device 14.

The superposition/separation unit 15 superposes various communication signals on the grounding line 33 and the control line 34, and separates superposed various communication signals. When the superposition/separation unit 15 superposes various communication signals output from the communication device 14, and inputs separated various communication signals to the communication device 14, the communication device 14 is allowed to perform communication.

The common mode choke coil 16 is interposed in the grounding line 33 and the control line 34, and is located between the charging control device 13, and branch portions 36a1 and 36b1 of the two branch lines 36a and 36b connected to the communication device 14 via the superposition/separation unit 16. The common mode choke coil 16 has a high impedance for common mode noise generated in the grounding line 33 and the control line 34.

The low-pass filter 17 is interposed in the control line 34. The low-pass filter 17 acts as a blocking section that transmits signals in a frequency band lower than a predetermined frequency, e.g., a signal in a frequency band used for the control signal, and blocks highfrequency communication signals.

In FIG. 1, the low-pass filter 17 is positioned between the charging control device 13 and the common mode choke coil 16. However, the common mode choke coil 16 may be located between the charging control device 13 and the low-pass filter 17.

Further, in FIG. 1, the charging control device 13, the common mode choke coil 16, and the low-pass filter 17 are shown as separated components. However, the charging control device 13 may include the common mode choke coil 16 and the low-pass filter 17. For example, the common mode choke coil 16 and the low-pass filter 17 may be integrated with each other inside or outside the charging control device 13.

By configuring the communication system of the present invention as shown in FIG. 1, a loop circuit for transmitting a communication signal is formed by the superposition/separation unit 15, the grounding line 33, the control line 34, the superposition/separation unit 23, and other lines, elements, and circuits. Thereby, inband communication in which a communication signal is superposed on the grounding line 33 and the control line 34 is realized between the communication device 14 in the vehicle 1 and the communication device 22 in the power supply device 2.

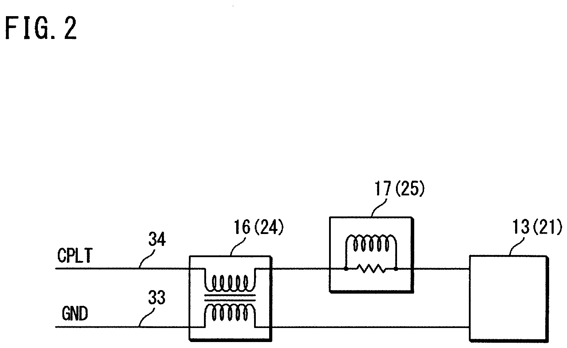

FIG. 2 is a circuit diagram showing examples of the common mode choke coils 16 and 24 and the low-pass filters 17 and 25 used in the communication system according to Fig. 1. FIG. 2 shows the common mode choke coil 16, the low-pass filter 17, and the charging control device 13 included in the vehicle 1 shown in FIG. 1. Since the arrangement of the common mode choke coil 24, the low-pass filter 25, and the charging control device 21 included in the power supply device 2 is similar to the arrangement shown in FIG. 2, these components will also be described with reference to FIG. 2 in which the reference numerals thereof are also shown.

The common mode choke coil 16 (24) is configured using a pair of induction elements or an equivalent circuit thereof, and has a high impedance for common mode noise while having a low impedance for signals such as the communication signal, the control signal, and the like.

The low-pass filter 17 (25) is, as shown in FIG. 2, configured as a circuit in which, for example, a coil having an inductance of 1.5 mH and a resistor of 1.0 kΩ are arranged in parallel, or as an equivalent circuit thereof. The low-pass filter may be configured using another circuit as long as similar characteristics can be achieved. In addition, the values of the elements used in the low-pass filter are merely examples, and elements of other values may be used.

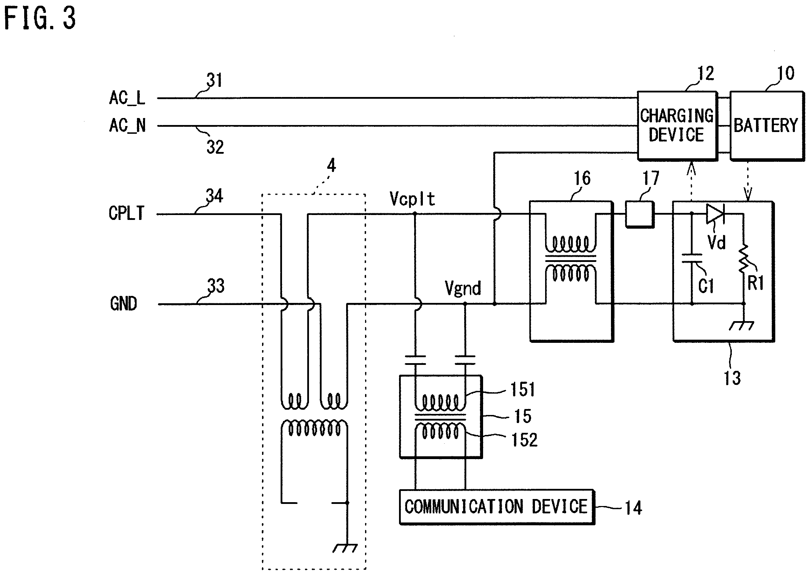

FIG. 3 is a circuit diagram showing an example of a simulation of common mode noise in the communication system according to Fig. 1. FIG. 3 shows an equivalent circuit for a BCI test executed as an evaluation test for common mode noise on the vehicle 1 side of the communication system shown in FIG. 1. In the evaluation test such as the BCI test, common mode noise is applied from a probe as a noise generation source to the grounding line 33 and the control line 34. In FIG. 3, reference numeral 4 denotes a simulation noise source which is an equivalent circuit of a noise generation source using a probe, and the simulation noise source 4 applies in-phase common mode noises to the grounding line 33 and the control line 34.

Voltages Vgnd and Vcplt applied as the common mode noises from the simulation noise source 4 to the grounding line 33 and the control line 34 are in-phase signals having the same amplitude. Since the common mode choke coil 16 has a high impedance for the common mode noises, the voltages Vgnd and Vcplt applied to the grounding line 33 and the control line 34 are not likely to be adversely affected by a line impedance due to the circuit in the charging control device 13. Then, the common mode noises do not flow into the charging control device 13, but flow from the both ends of the first coil 151 into the superposition/separation unit 15, as in-phase signals having substantially the same amplitude. In other words, the common mode noises are applied to the superposition/separation unit 15 without being changed into normal mode noises. The common mode noises flowing from the both ends of the first coil 151 are the in-phase signals having substantially the same amplitude, and therefore, cancel out each other in the first coil 151 and do not flow into the communication device 14. Accordingly, it is possible to prevent occurrence of abnormality such as false operation due to flow of noise into the communication device 14.

A situation similar to above occurs on the power supply device 2 side, and it is possible to prevent occurrence of abnormality such as false operation due to flow of noise into the communication device 22.

### Embodiment 1

In Embodiment 1, a common mode choke coil is added to the power receiving connector of Fig. 1. In the following description, as for the components identical to those of Fig. 1, explanations of Fig. 1 are supposed to be referred to, and therefore, description thereof will be omitted.

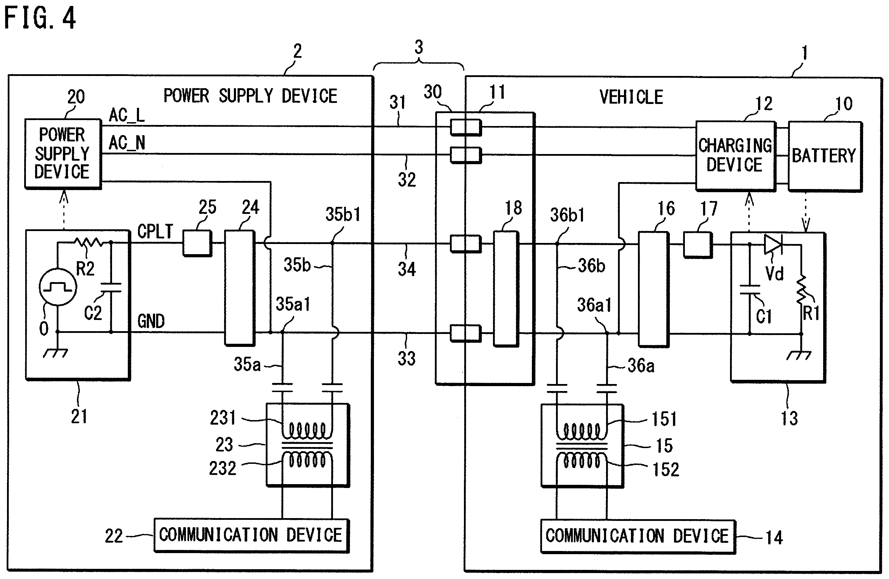

FIG. 4 is a diagram showing an exemplary configuration of a communication system according to Embodiment 1 of the present invention. FIG. 4 shows a configuration obtained by adding a common mode choke coil 18 to the communication system according to Embodiment 1 shown in FIG. 1. In the exemplary configuration shown in FIG. 4, the common mode choke coil 18 using a pair of induction elements is incorporated in a casing of the power receiving connector 11. In the power receiving connector 11, the common mode choke coil 18 is interposed in the internal lines connected to the grounding line 33 and the control line 34.

The common mode choke coil 18 incorporated in the power receiving connector 11 has a high impedance for common mode noise generated in the grounding line 33 and the control line 34, and therefore, resistance to the common mode noise can be enhanced as compared to the example shown in Fig. 1. The common mode choke coil 18 may be provided outside the casing of the power receiving connector 11 as long as it is integrated with the power receiving connector 11.

By configuring the communication system of the present invention as shown in FIG. 4, a loop circuit for transmitting a communication signal is formed by the superposition/separation unit 15, the grounding line 33, the control line 34, the superposition/separation unit 23, and other lines, elements, and circuits. Thereby, inband communication in which the communication signal is superposed on the grounding line 33 and the control line 34 is realized between the communication device 14 in the vehicle 1 and the communication device 22 in the power supply device 2.

### Embodiment 2

Embodiment 2 provides a configuration in which the common mode choke coil located between the charging control device and the branch portions 36a1 and 36b1 of the two branch lines 36a and 36b connected to the communication device via the superposition/separation unit, is omitted from Embodiment 1. In the following description, as for the components identical to those of Embodiment 1, Embodiment 1 is supposed to be referred to, and therefore, description thereof will be omitted.

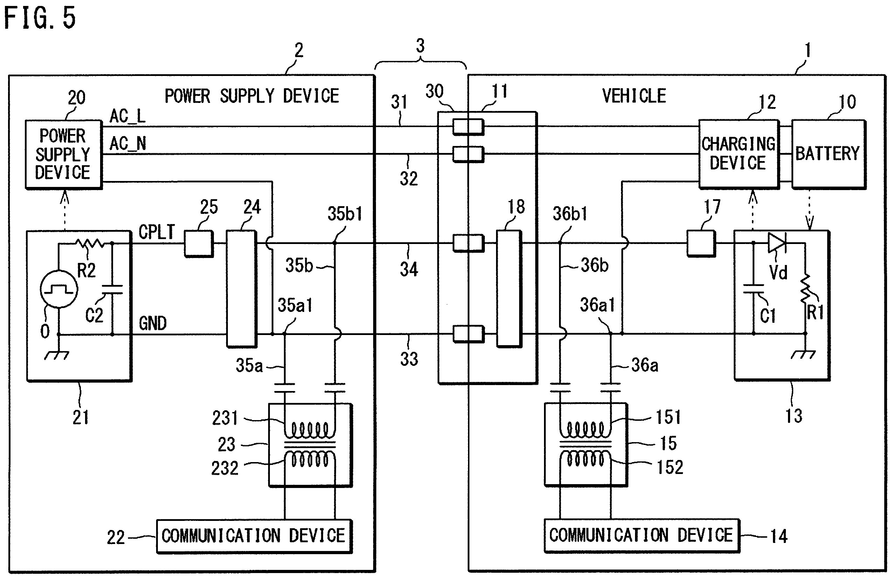

FIG. 5 is a diagram showing an exemplary configuration of a communication system according to Embodiment 2 of the present invention. FIG. 5 shows a configuration obtained by omitting the common mode choke coil 16 in the communication system of Embodiment 1 shown in FIG. 4. In the exemplary configuration of FIG. 5, a common mode choke coil 18 using a pair of induction elements is incorporated in the casing of the power receiving connector 11. In the power receiving connector 11, the common mode choke coil 18 is interposed in the internal lines connected to the grounding line 33 and the control line 34.

The common mode choke coil 18 incorporated in the power receiving connector 11 has a high impedance for common mode noise generated in the grounding line 33 and the control line 34, and therefore, suppresses the common mode noise that flows into the vehicle 1. In addition, the common mode choke coil 18 prevents the common mode noise generated in the device in the vehicle 1 from flowing out of the vehicle 1. The common mode choke coil 18 may be provided outside the casing of the power receiving connector 11 as long as it is integrated with the power receiving connector 11. In addition, the low-pass filter 17 may be integrated with the power receiving connector 11.

By configuring the communication system of the present invention as shown in FIG. 5, a loop circuit for transmitting a communication signal is formed by the superposition/separation unit 15, the grounding line 33, the control line 34, the superposition/separation unit 23, and other lines, elements, and circuits. Thereby, inband communication in which the communication signal is superposed on the grounding line 33 and the control line 34 is realized between the communication device 14 in the vehicle 1 and the communication device 22 in the power supply device 2.

Embodiments 1 and 2 are merely disclosure of part of infinite number of examples of the present invention, and can be appropriately designed by adding various factors such as the purpose, usage, mode, and the like. For example, in the above embodiments, the communication device is connected to the branch lines branched from the control line and the grounding line via the superposition/separation unit. However, the superposition/separation unit or the like may be interposed in the control line or the like, and the communication device or the like may be connected to the interposed superposition/separation unit or the like. Further, in the embodiments of the present invention, the common mode choke coil is provided on both the power supply device side and the vehicle side. However, the common mode choke coil may be provided on one of the power supply device side and the vehicle side. Further, the superposition/separation unit and/or the coupling capacitors provided on the respective branch lines may be incorporated in the communication device.

Further, the present invention is also applicable to, for example, a system regarding charging of an object to be charged other than batteries included in vehicles. Thus, the present invention can be developed into various modes.

### REFERENCE SIGNS LIST

- 1: vehicle
- 10: battery (power storage device)
- 11: power receiving connector
- 12: charging device
- 13: charging control device
- 14: communication device
- 15: superposition/separation unit
- 151: first coil
- 152: second coil
- 16: common mode choke coil (a pair of dielectric elements)
- 17: low-pass filter
- 18: common mode choke coil (a pair of induction elements)
- 2: power supply device
- 20: power supply device
- 21: charging control device
- 22: communication device
- 23: superposition/separation unit
- 24: common mode choke coil (a pair of dielectric elements)
- 25: low-pass filter
- 3: charging cable
- 31,32: power supply line
- 33: grounding line
- 34: control line

## Claims

1. A communication system in which communication is performed between a vehicle (1) and a power supply device (2) by performing superposition and separation of a communication signal on and from a control line (34) for transmitting a control signal used for control of charging of an object (10) to be charged and a reference potential line (33) connected to a reference potential, the communication signal being different from the control signal, the superposition and separation being performed by a superposition/separation unit (23), the object (10) to be charged being connected to a power supply line (31, 32),
wherein the vehicle (1) comprises
a power storage device that is the object to be charged,
a first charging control device (13) connected, via first two extended lines in the vehicle, to one end of each of the control line (34) and the reference potential line (33), the first charging control device being configured to control charging in accordance with the control signal;
a connector (11) for connecting the one end of the control line to one of the first two extended lines and for connecting the one end of the reference potential line to another of the first two extended lines, and
a first communication device (14) connected, via a first superposition/separation unit (15) to each of first two branch lines (36a, 36b) branched from each of the first two extended lines, the first communication device (14) being configured to perform communication by the communication signal, and
wherein the power supply device (2) comprises
a second charging control device (21) connected, via second two extended lines in the power supply device, to another end of each of the control line (34) and the reference potential line (33), the second charging control device (20) being configured to control charging in accordance with the control signal, and
a second communication device (22) connected, via a second superposition/separation unit(23), to each of second two branch lines (35a, 35b) branched from each of the second two extended lines, the second communication device (21) being configured to perform communication by the communication signal,
**characterized in that**
the vehicle (1) comprises
a first common mode choke coil (16) serially connected to each of the first two extended lines between the first charging control device (13) and branch portions (36a1, 36b1) of the first two branch lines (36a, 36b1), and
a second common mode choke coil (18) serially connected to each of two internal lines connected to each of the control line (34) and the reference potential line (33) in the connector (11), the second common mode choke coil (18) being provided in the connector (11), and
the power supply device (2) comprises
a third common mode choke coil (24) serially connected to each of the second two extended lines between the second charging control device and branch portions (35a1, 35b1) of the second two branch lines (35a, 35b).

## Patentansprüche

1. Kommunikationssystem, in dem eine Kommunikation zwischen einem Fahrzeug (1) und einer Stromversorgungsvorrichtung (2), durch Durchführen einer Überlagerung und Trennung eines Kommunikationssignals auf und von einer Steuerungsleitung (34) zum Übertragen eines Steuerungssignals, das zur Steuerung eines Ladens eines zu ladenden Objekts (10) verwendet wird, und einer Bezugspotenzialleitung (33), die mit einem Bezugspotenzial verbunden ist, durchgeführt wird, wobei sich das Kommunikationssignal von dem Steuerungssignal unterscheidet, wobei die Überlagerung und Trennung durch eine Überlagerungs- / Trennungseinheit (23) durchgeführt wird, wobei das zu ladende Objekt (10) mit einer Stromversorgungsleitung (31, 32) verbunden ist,
wobei das Fahrzeug (1) umfasst
eine Stromspeichervorrichtung, bei der es sich um das zu ladende Objekt handelt, eine erste Ladesteuerungsvorrichtung (13), die über erste zwei verlängerte Leitungen in dem Fahrzeug mit einem Ende jeder der Steuerungsleitung (34) und der Bezugspotenzialleitung (33) verbunden ist, wobei die erste Ladesteuerungsvorrichtung dazu konfiguriert ist, ein Laden gemäß dem Steuerungssignal zu steuern;
einen Steckverbinder (11) zum Verbinden des einen Endes der Steuerungsleitung mit einer der ersten zwei verlängerten Leitungen und zum Verbinden des einen Endes der Bezugspotenzialleitung mit einer anderen der ersten zwei verlängerten Leitungen, und
eine erste Kommunikationsvorrichtung (14), die über eine erste Überlagerungs- / Trennungseinheit (15) mit jeder von ersten zwei Abzweigleitungen (36a, 36b), die von jeder der ersten zwei verlängerten Leitungen abgezweigt sind, verbunden ist, wobei die erste Kommunikationsvorrichtung (14) dazu konfiguriert ist, durch das Kommunikationssignal eine Kommunikation durchzuführen, und
wobei die Stromversorgungsvorrichtung (2) umfasst
eine zweite Ladesteuerungsvorrichtung (21), die über zweite zwei verlängerte Leitungen der Stromversorgungsvorrichtung mit einem anderen Ende jeder der Steuerungsleitung (34) und der Bezugspotenzialleitung (33) verbunden ist, wobei die zweite Ladesteuerungsvorrichtung (20) dazu konfiguriert ist, ein Laden gemäß dem Steuerungssignal zu steuern, und
eine zweite Kommunikationsvorrichtung (22), die über eine zweite Überlagerungs- / Trennungseinheit (23) mit jeder von zweiten zwei Abzweigleitungen (35a, 35b), die von jeder der zweiten zwei verlängerten Leitungen abgezweigt sind, verbunden ist, wobei die zweite Kommunikationsvorrichtung (21) dazu konfiguriert ist, durch das Kommunikationssignal eine Kommunikation durchzuführen,
**dadurch gekennzeichnet, dass**
das Fahrzeug (1) umfasst
eine erste Gleichtaktdrosselspule (16), die mit jeder der ersten zwei verlängerten Leitungen zwischen der ersten Ladesteuerungsvorrichtung (13) und Abzweigabschnitten (36a1, 36b1) der ersten zwei Abzweigleitungen (36a, 36b1) seriell verbunden ist, und
eine zweite Gleichtaktdrosselspule (18), die mit jeder von zwei internen Leitungen, die mit jeder der Steuerungsleitung (34) und der Bezugspotenzialleitung (33) in dem Steckverbinder (11) verbunden sind, seriell verbunden ist, wobei die zweite Gleichtaktdrosselspule (18) in dem Steckverbinder (11) bereitgestellt ist, und
die Stromversorgungsvorrichtung (2) umfasst
eine dritte Gleichtaktdrosselspule (24), die mit jeder der zweiten zwei verlängerten Leitungen zwischen der zweiten Ladesteuerungsvorrichtung und Abzweigabschnitten (35a1, 35b1) der zweiten zwei Abzweigleitungen (35a, 35b) seriell verbunden ist.

## Revendications

1. Système de communication dans lequel une communication est effectuée entre un véhicule (1) et un dispositif d'alimentation en énergie (2) en effectuant une superposition et une séparation d'un signal de communication sur et à partir d'une ligne de commande (34) pour transmettre un signal de commande utilisé pour commander la charge d'un objet (10) à charger et d'une ligne de potentiel de référence (33) reliée à un potentiel de référence, le signal de communication étant différent du signal de commande, la superposition et la séparation étant réalisées par une unité de superposition/séparation (23), l'objet (10) à charger étant relié à une ligne d'alimentation en énergie (31, 32);
dans lequel le véhicule (1) comprend :
un dispositif de stockage d'énergie qui est l'objet à charger ;
un premier dispositif de commande de charge (13) relié, via deux premières lignes prolongées dans le véhicule, à une extrémité de chacune des lignes de commande (34) et de potentiel de référence (33), le premier dispositif de commande de charge étant configuré pour commander la charge en accord avec le signal de commande ;
un connecteur (11) pour relier ladite extrémité de la ligne de commande à l'une des deux premières lignes prolongées et pour relier ladite extrémité de la ligne de potentiel de référence à une autre des deux premières lignes prolongées ; et
un premier dispositif de communication (14) relié, via une première unité de superposition/séparation (15) à chacune de deux premières lignes de dérivations (36a, 36b) dérivées de chacune des deux premières lignes prolongées, le premier dispositif de communication (14) étant configuré pour effectuer une communication par le signal de communication ; et
dans lequel le dispositif d'alimentation en énergie (2) comprend :
un second dispositif de commande de charge (21) relié, via deux secondes lignes prolongées dans le dispositif d'alimentation, à une autre extrémité de chacune des lignes de commande (34) et de potentiel de référence (33), le second dispositif de commande de charge (20) étant configuré pour commander la charge en accord avec le signal de commande, et
un second dispositif de communication (22) relié, via une seconde unité de superposition/séparation (23), à chacune de deux lignes de dérivation (35a, 35b) dérivées de chacune des deux secondes lignes prolongées, le second dispositif de communication (21) étant configuré pour effectuer une communication par le signal de communication,
**caractérisé en ce que**
le véhicule (1) comprend :
une première bobine d'arrêt de mode commun (16) reliée en série à chacune des deux premières lignes prolongées entre le premier dispositif de commande de charge (13) et des parties de dérivation (36a1, 36b1) des deux premières lignes de dérivation (36a, 36b1), et
une deuxième bobine d'arrêt de mode commun (18) reliée en série à chacune de deux lignes internes reliées à chacune des lignes de commande (34) et de potentiel de référence (33) du connecteur (11), la deuxième bobine d'arrêt de mode commun (18) étant prévue dans le connecteur (11) ; et
le dispositif d'alimentation en énergie (2) comprend :
une troisième bobine d'arrêt de mode commun (24) reliée en série à chacune des deux secondes lignes prolongées entre le second dispositif de commande de charge et des parties de dérivation (35a1, 35b1) des deux secondes lignes de dérivation (35a, 35b).
